# EUROPÄISCHE PATENTANMELDUNG

(11) **EP 4 686 400 A1**
(43) Veröffentlichungstag der Anmeldung: **04.02.2026**
(21) Anmeldenummer: 25186286.8
(22) Anmeldetag: 30.06.2025
(51) Int. Cl.: A01K 1/00

(54) **STROMISOLIERENDES MONTAGEBAUTEIL**

(30) Priorität: 31.07.2024 DE 102024121874
(71) Anmelder: PATURA KG, 63925 Laudenbach (DE)
(72) Erfinder: ALLIÉ, Bernd, 63925 Laudenbach (DE)
(74) Vertreter: Lorenz Seidler Gossel Part. mbB

(57) **Zusammenfassung**

In Ställen eingesetzte verzinkte Bauteile korrodieren sehr schnell. Die vorliegende Erfindung betrifft ein Montagebauteil (1), welches die Korrosion verhindert oder reduziert. Ein Erfindungsgemäßes Montagebauteil ist dazu ausgelegt, an mindestens einer Stalleinrichtungskomponente (11) montiert zu werden und ist weiterhin dazu ausgelegt, einen Stromfluss durch das Montagebauteil und / oder die mindestens eine Stalleinrichtungskomponente zu unterbinden.

## Beschreibung

Die vorliegende Erfindung betrifft ein stromisolierendes Montagebauteil für eine Stalleinrichtungskomponente und ein System aus mindestens einer Stalleinrichtungskomponente und einem solchen stromisolierenden Montagebauteil.

**In** der Nutztierhaltung kommen oft verzinkte Stalleinrichtungskomponenten, beispielsweise zum Abtrennen bestimmter Stallbereiche etc. zum Einsatz. Derartige, in Ställen eingesetzte verzinkte Bauteile korrodieren in der Praxis jedoch sehr schnell, was die Lebensdauer der Stalleinrichtungskomponenten verringert und einen erhöhten Arbeitsaufwand erzeugt. Insbesondere dann, wenn Tiere auf Tiefstreu gehalten werden, entsteht eine besonders schnelle Korrosion.

Der vorliegenden Erfindung liegt die Aufgabe zugrunde, die Probleme des Stands der Technik abzumildern oder gar ganz zu beseitigen. Insbesondere liegt der vorliegenden Erfindung die Aufgabe zugrunde, eine Möglichkeit zu schaffen, eine Korrosion von Stalleinrichtungskomponenten zu verhindern und vorzugsweise gleichzeitig das Tierwohl der gehaltenen Tiere zu erhöhen.

Diese Aufgabe wird durch die Gegenstände der unabhängigen Ansprüche gelöst. Vorteilhafte Weiterbildungen sind Gegenstand der abhängigen Ansprüche.

Demnach ist ein Montagebauteil vorgesehen, welches dazu ausgelegt ist, an mindestens einer Stalleinrichtungskomponente montiert zu werden und welches weiterhin dazu ausgelegt ist, einem Stromfluss durch das Montagebauteil und / oder die mindestens eine Stalleinrichtungskomponente zu unterbinden.

Der vorliegenden Erfindung liegt somit die Erkenntnis der Erfinder zugrunde, dass die Korrosion der Stalleinrichtungskomponenten maßgeblich von aus der Tiefstreu bzw. Mistmatratze herrührenden Kriechströmen herrührt, die durch die Stalleinrichtungskomponenten, die häufig aus verzinkten Bauteilen bestehen, proagieren und zu einer beschleunigten Abtragung der Verzinkung führen.

Kriechströme sind als Ursache für extreme Korrosion von verzinkten Stahlteilen im Stallbereich relativ unbekannt. Diese durch Mist entstehenden Ströme sorgen für einen beschleunigten Zinkabtrag. Um das Problem kostengünstig und dauerhaft zu lösen, wurden die erfindungsgemäßen Montagebauteile entwickelt, welche den Stromfluss unterbrechen und die Stalleinrichtung zuverlässig schützen.

Herkömmliche Stalleinrichtungen werden mit handelsüblichen Montageteilen aus leitendem Material, meist aus Metall, beispielsweise verzinktem Blech oder Stahl, montiert. Als Vorsorge gegen Rost oder Korrosion durch Kriechströme gibt es herkömmlicherweise bis jetzt keine praktikable Möglichkeit, Stalleinrichtungskomponenten wie Abtrennungen, Tore oder Fressgitter zu schützen.

Die erfindungsmäßen Montagebauteile eröffnen im Kampf gegen Rost neue und flexible Möglichkeiten, indem beispielsweise auch mobile Stalleinrichtungskomponenten, wie z.B. Panele, Gatter oder Raumtrenner, zuverlässig vor Korrosion geschützt werden können.

Bislang sind am Markt nur Lösungen verfügbar, die beispielsweise fest im Stallgebäude verbaute Pfosten schützen. Zu diesen Lösungen zählen unter anderem Bitumenschutzanstriche, Kunststoff- oder PVC-Schutzhülsen. Diese Maßnahmen schützen jedoch nur die Pfosten selbst und verlieren ihre Wirkung teilweise sehr schnell, sobald die Mistmatratze wächst bzw. müssen sogar regelmäßig erneuert werden. Edelstahlpfosten bieten hier eine zuverlässige Schutzwirkung, die Korrosionsgefahr für alle Bauteile wie Stalleinrichtungskomponenten, die an diesen Pfosten befestigt sind, bleibt jedoch bestehen.

Die erfindungsgemäßen Montagebauteile bieten einen langlebigen, kostengünstigen und einfach nachzurüstenden Rostschutz für alle Stalleinrichtungskomponenten, auch für mobile Stalleinrichtungskomponenten, die beispielsweise mit fest verbauten Pfosten direkt oder indirekt lösbar verbindbar sind. Die erfindungsgemäßen Montagebauteile sorgen somit für einen Mehrwert in Ställen aller Tierarten, insbesondere bei Tierarten, die auf Stroheinstreu gehalten werden.

In Feldversuchen wurde festgestellt: Rost entsteht am häufigsten und schnellsten in Gebäuden mit einer Stahlkonstruktion und Tieren in Tiefstreu. Unter feuchten Bedingungen kann Mist sich wie der Elektrolyt einer Batterie (Primärelement) verhalten. In Gegenwart zweier Metallteile (Pole) kann es zu einem Stromfluss kommen. An isolierenden Bauteilen, wie z.B. Holzbauteilen, aufgehängt, besteht keine Möglichkeit eines Stromkreises, an Stahlbauteilen allerdings schon. Der dadurch entstehende Stromfluss kann den Zinkabtrag und somit die Korrosion der Stalleinrichtungskomponenten beschleunigen. Ein Praxisvergleich machte deutlich, bei Verwendung der erfindungsgemäßen Montagebauteile entstand, trotz der Anwesenheit von Mist, kein Rost bzw. keine Korrosion an Stalleinrichtungskomponenten mit vorzugsweise verzinkten Stahlteilen.

Einzelne Vorteile der erfindungsgemäßen Montagebauteile sind Rostschutz, Kostenersparnis, Langlebigkeit und Tierwohl. Erfindungsgemäße Montagebauteile verhindern Rost, der durch Kriechströme durch die Mistmatratze entsteht - teure und zeitaufwändige Umbauten von beschädigten Abtrennungen, Fressgittern oder Toren sind passé, da die zinkabtragenden Kriechströme unterbunden werden. Die Langlebigkeit aller Bauteile schont die Umwelt. Nachträgliche Einbauten sind ohne Probleme möglich, auf neue Situationen in einem Betrieb kann schnell reagiert werden. Dies spart Kosten und Zeit. Des Weiteren entsteht durch die 2-in-1 Lösung (Montagefunktion und elektrische Isolation in einem Bauteil) kein Mehraufwand bei der Montage: Das Montagebauteil bzw. die Schelle, die sowieso benötigt wird, wird verbaut und schützt von Beginn an die Stalleinrichtung vor kostenintensiven Schäden durch Kriechströme - kein zusätzliches Produkt wird benötigt.

Durch Vermeidung der Kriechströme werden die Tiere diesen nicht mehr ausgesetzt, was das Tierwohl steigert.

Gemäß einer Ausführungsform kann ein erfindungsgemäßes Montagebauteil zumindest eine Beschichtung aus einem elektrisch nichtleitenden und / oder isolierenden Material aufweisen, wobei die Beschichtung vorzugsweise dazu ausgelegt ist, mit der Stalleinrichtungskomponente in Anlage zu treten.

Alternativ oder zusätzlich kann das Montagebauteil zumindest teilweise, vorzugsweise vollständig, aus einem elektrisch nichtleitenden und / oder isolierenden Material bestehen.

Das elektrisch nichtleitende und / oder isolierende Material kann ein elastisches oder steifes Polymer, insbesondere Polyvinylchlorid, Polyurethan, Polyethylen oder Polyamid, oder Keramik oder Glas sein und kann vorzugsweise mit Farbpigmenten versetzt sein.

Ein elastisches Polymer ist insbesondere dann vorteilhaft, wenn das Montagebauteil eine Beschichtung aus dem elektrisch nichtleitenden und / oder isolierenden Material und vorzugsweise einen Metallkern aufweist.

Das elastische Polymer kann neben seiner elektrischen Isolationsfunktion auch eine akustische Dämpfung bieten und beispielsweise Verbindungsstellen zwischen Komponenten aus steifem Material, beispielsweise Metall, abdämpfen, wodurch eine Lärmentwicklung beim Bewegen der Stalleinrichtungskomponenten, beispielsweise Klappern oder Rasseln, reduziert wird.

Steifes Polymer ist beispielsweise hilfreich, wenn das gesamte Montagebauteil aus dem Polymer besteht, welches in diesem Fall auch für mechanische Stabilität sorgen muss.

Das Montagebauteil kann ein Verbindungsteil zum vorzugsweise lösbaren Verbinden an einer Stalleinrichtungskomponente und / oder mindestens zweier Stalleinrichtungskomponenten aneinander sein, vorzugsweise eine Montageschelle, ein Montageanschraubteil, ein Steckbolzen, eine Schraube, ein beliebiges anderes Sicherungselement für eine Stalleinrichtungskomponente, eine Einlage, Platte oder Unterlegscheibe. Diese Ausgestaltungen sind jedoch nur exemplarisch zu betrachten und beschränken die Erfindung nicht.

Weiterhin kann das Montagebauteil dazu ausgelegt sein, mit einem weiteren Montagebauteil gleicher Bauart zu einer Montageeinheit vorzugsweise lösbar derart verbindbar zu sein, dass ein Bereich der Montageeinheit, welcher dazu ausgelegt ist, mit einer Stalleinrichtungskomponente in Anlage zu treten, teilweise oder vollständig durch elektrisch nichtleitendes und / oder isolierendes Material gebildet wird.

Beispielsweise kann die durch zwei Montagebauteile gebildete Montageeinheit einen Pfosten umgreifen.

Weiterhin betrifft die Erfindung ein System aus mindestens einer Stalleinrichtungskomponente, welche vorzugsweise mindestens ein verzinktes Stahlteil aufweist oder aus diesem besteht, und mindestens einem Montagebauteil gemäß der vorliegenden Erfindung.

Bei der Stalleinrichtungskomponente kann es sich beispielsweise um eine Abtrennung, ein Panel, ein Gatter, eine Tür, einen Rahmen, einen Fressständer, ein Fressgitter, einen Raumteiler oder eine sonstige Einrichtungskomponente aus der Nutztierhaltung handeln.

Gemäß einer Ausführungsform können mindestens zwei Stalleinrichtungskomponenten, welche vorzugsweise jeweils mindestens ein verzinktes Metall- oder Stahlteil aufweisen, mittels mindestens eines Montagebauteils gemäß der vorliegenden Erfindung miteinander lösbar und / oder elektrisch isolierend verbunden sein.

Weiterhin betrifft die vorliegende Erfindung eine Verwendung mindestens eines Montagebauteils gemäß der vorliegenden Erfindung zur Verhinderung von Korrosion mindestens einer Stalleinrichtungskomponente, welche vorzugsweise mindestens ein verzinktes Stahlteil aufweist oder aus diesem besteht.

Zudem betrifft die vorliegende Erfindung eine Verwendung mindestens eines Montagebauteils gemäß der vorliegenden Erfindung zur Unterbrechung und / oder Verhinderung eines Stromflusses durch mindestens eine Stalleinrichtungskomponente, welche vorzugsweise mindestens ein verzinktes Stahlteil aufweist oder aus diesem besteht.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Weiterhin können alle hierin beschriebenen Merkmale der Erfindung beliebig miteinander kombiniert oder voneinander isoliert beansprucht werden.

Weitere Einzelheiten und Vorteile der Erfindung werden anhand der in den Zeichnungen dargestellten Ausführungsbeispiele näher erläutert. Gleiche Bezugszeichen bezeichnen gleiche oder ähnliche Bauteile.

Es zeigen:
Figur 1: Eine Ansicht einer erfindungsgemäßen Montageschelle;
Figur 2: eine andere Ansicht der Montageschelle aus Fig. 1;
Figur 3: eine Detailansicht der Montageschelle aus Fig. 1, welche die Beschichtung aus isolierendem Material verdeutlicht;
Figur 4: eine weitere Detailansicht der Montageschelle aus Fig. 1, welche die Beschichtung aus isolierendem Material verdeutlicht;
Figur 5: eine aus zwei Montageschellen gemäß Fig. 1 gebildete Montageeinheit, welche einen Pfosten umgreift;
Figur 6: eine andere Ansicht der Montageeinheit aus Fig. 5,
Figur 7: eine schematische Ansicht der Stromflüsse in herkömmlicher Stalleinrichtung; und
Figur 8: eine schematische Ansicht der Stromflüsse in einer Stalleinrichtung mit erfindungsgemäßen Montageschellen.

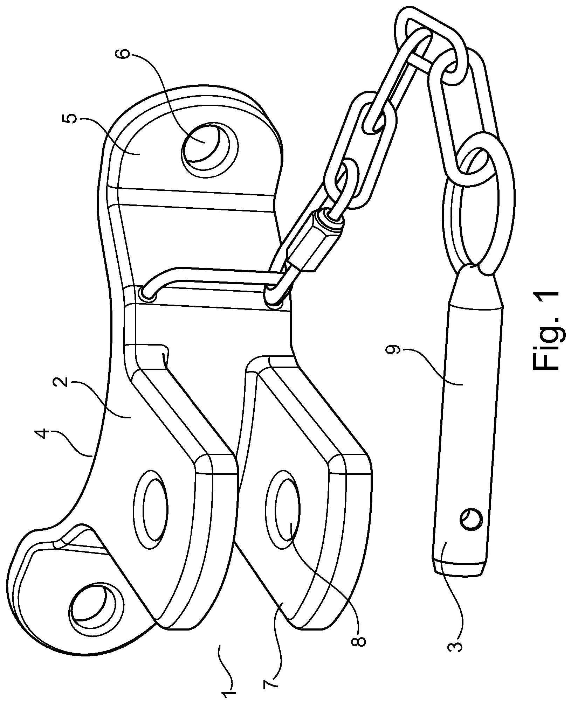

Die in Fig. 1 gezeigte Montageschelle weist einen Grundkörper 2 und ein Sicherungselement 3 auf. Das Sicherungselement 3 ist als mit einer Kette an dem Grundkörper 2 gesicherter Bolzen 9 ausgebildet, und dient dazu, die Montageschelle 1 mit einem anderen Bauteil, beispielsweise einer Abtrennung, zu verbinden.

In dieser Ausgestaltung ist der gesamte Grundkörper 2 mit einer elektrisch isolierenden Beschichtung, in diesem Fall aus PVC, überzogen.

Der Grundkörper 2 weist einen halbkreisförmigen Aufnahmebereich 4 auf, welcher dazu ausgelegt ist, ein Teil einer Stalleinrichtungskomponente zumindest teilweise zu umgreifen.

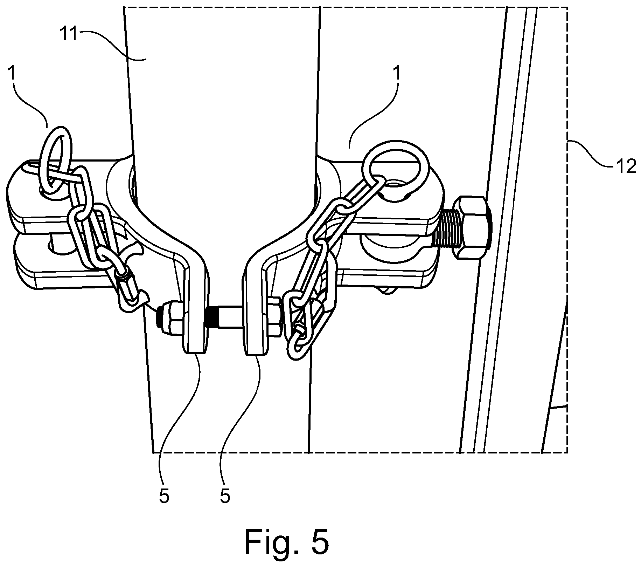

Der Grundkörper 2 weist weiterhin zwei Verbindungsabschnitte 5 mit jeweils einer Öffnung 6 auf, mittels welchen die Montageschelle 1, wie in Fig. 5 gezeigt, an einer anderen Montageschelle 1, oder an einem anderen beliebigen Bauteil, lösbar fixierbar ist.

Weiterhin weist der Grundkörper 2 eine Montagespange mit zwei Schenkeln 7 mit jeweils einer Öffnung 8 auf, mittels welchen die Montageschelle 1, ebenfalls wie in Fig. 5 gezeigt, an einem anderen beliebigen Bauteil, z.B. dem Bauteil 12, lösbar fixierbar ist.

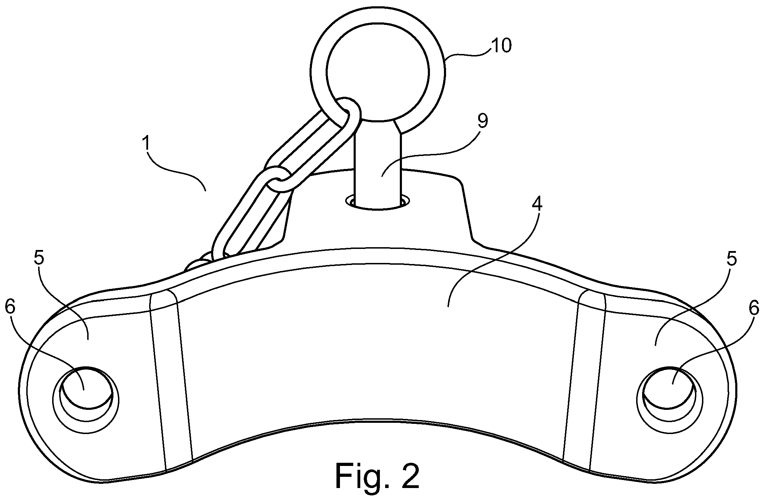

Figur 2 zeigt die Montageschelle 1 aus Fig. 1 von dem Aufnahmebereich 4 aus. Hierbei ist gut zu erkennen, dass der gesamte Aufnahmebereich 4, welcher dazu ausgelegt ist, mit einer Stalleinrichtungskomponente in Anlage zutreten, mit der Beschichtung aus isolierendem Material bedeckt ist.

Zudem ist gut erkennbar, dass der Bolzen 9 einen Ring 10 zum Herausziehen des Bolzens 9 aus der Öffnung aufweist.

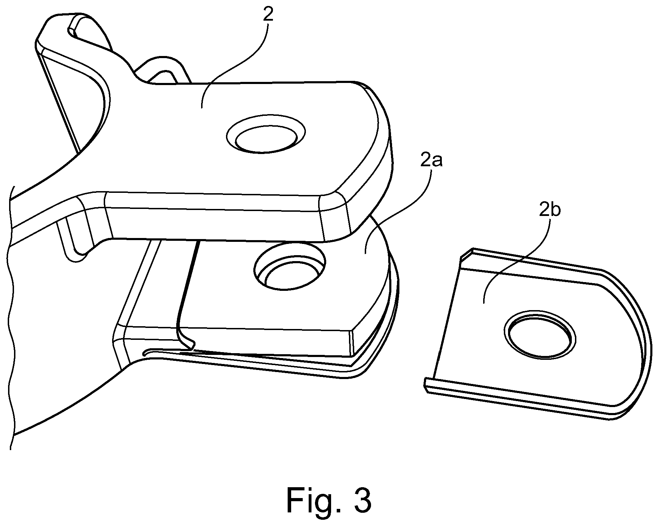

Wie in Fig. 3 gezeigt, weist der Grundkörper 2 einen Metallkern 2a und eine isolierende Beschichtung 2b aus PVC auf. Zur besseren Erkennbarkeit wurde in Fig. 3 ein Teil der Beschichtung 2b von dem Metallkern 2a abgetrennt.

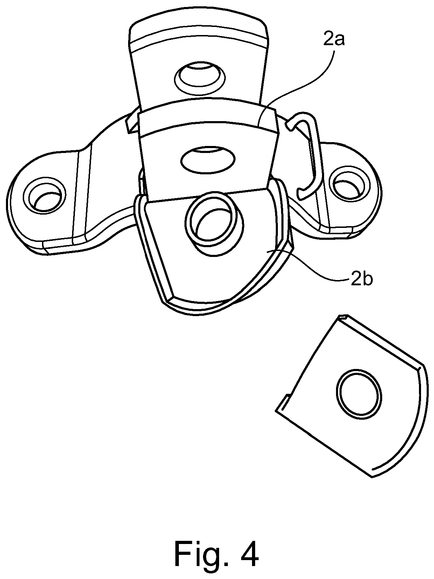

In Fig. 4 sind der Metallkern 2a und die isolierende Beschichtung 2b besonders gut erkennbar. Hierbei ist ebenfalls erkennbar, dass die Beschichtung 2b den Metallkern 2a in dieser Ausgestaltung einstückig und vollumfänglich umgibt.

Fig. 5 zeigt eine aus zwei miteinander verbundenen Montageschellen 1 gebildete Montageeinheit, welche einen Pfosten 11 umgreift. Die zwei Montageschellen 1 sind über ihre Verbindungsabschnitte 5 miteinander verbunden, die Verbindungsabschnitte 5 sind hierbei miteinander verschraubt.

Die in Fig. 5 auf der rechten Seite gezeigte Montageschelle 1 ist mit ihrer Montagespange an einem weiteren Bauteil 12 lösbar fixiert. Der Pfosten 11 und das Bauteil 12 sind aus verzinktem Metall.

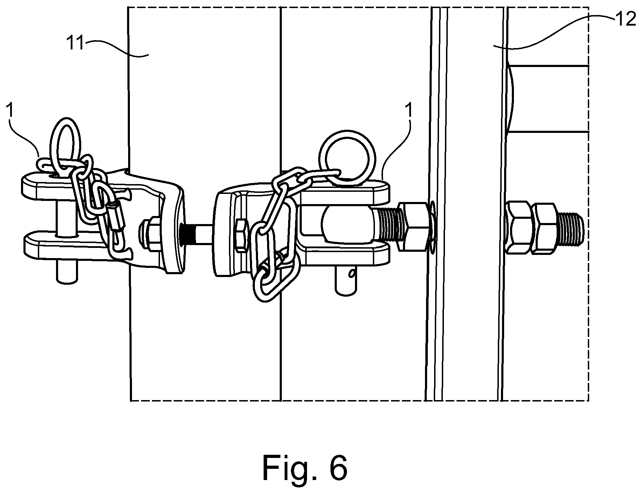

Fig. 6 zeigt eine weitere Ansicht der Montageeinheit aus Fig. 5.

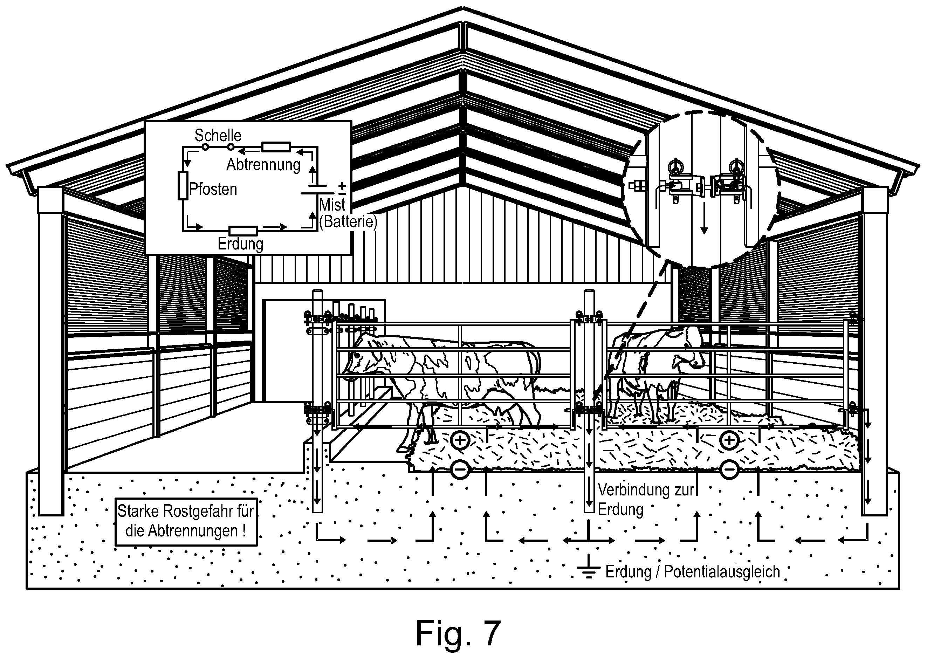

Wie in Fig. 7 verdeutlicht, fließt bei einer herkömmlichen Stalleinrichtung mit elektrisch leitenden Montagebauteilen Strom durch die diversen Gatter und Absperrungen.

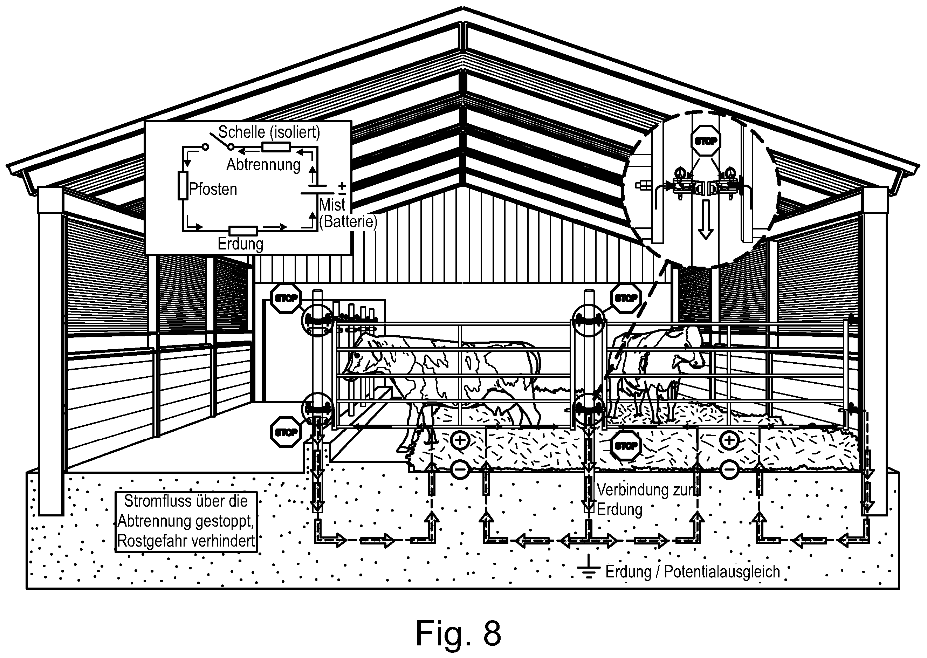

Dies kann durch die erfindungsgemäßen Montagebauteile unterbunden werden, wie in Fig. 8 verdeutlicht.

## Patentansprüche

1. Montagebauteil, welches dazu ausgelegt ist, an mindestens einer Stalleinrichtungskomponente montiert zu werden und welches weiterhin dazu ausgelegt ist, einen Stromfluss durch das Montagebauteil und / oder die mindestens eine Stalleinrichtungskomponente zu unterbinden.

2. Montagebauteil gemäß Anspruch 1, **dadurch gekennzeichnet, dass** das Montagebauteil zumindest eine Beschichtung aus einem elektrisch nichtleitenden und / oder isolierenden Material aufweist, wobei die Beschichtung vorzugsweise dazu ausgelegt ist, mit der Stalleinrichtungskomponente in Anlage zu treten.

3. Montagebauteil gemäß Anspruch 1 oder 2, **dadurch gekennzeichnet, dass** das Montagebauteil zumindest teilweise, vorzugsweise vollständig, aus einem elektrisch nichtleitenden und / oder isolierenden Material besteht.

4. Montagebauteil gemäß Anspruch 2 oder 3, **dadurch gekennzeichnet, dass** das elektrisch nichtleitende und / oder isolierende Material ein elastisches oder steifes Polymer, insbesondere Polyvinylchlorid, Polyurethan, Polyethylen oder Polyamid, oder Keramik oder Glas ist.

5. Montagebauteil gemäß einem der vorhergehenden Ansprüche, **dadurch gekennzeichnet, dass** das Montagebauteil ein Verbindungsteil zum vorzugsweise lösbaren Verbinden an einer Stalleinrichtungskomponente und / oder mindestens zweier Stalleinrichtungskomponenten aneinander, vorzugsweise eine Montageschelle, ein Montageanschraubteil, ein Steckbolzen, eine Schraube, ein beliebiges anderes Sicherungselement für eine Stalleinrichtungskomponente, eine Einlage, Platte oder Unterlegscheibe ist.

6. Montagebauteil gemäß einem der vorhergehenden Ansprüche, **dadurch gekennzeichnet, dass** das Montagebauteil dazu ausgelegt, mit einem weiteren Montagebauteil gleicher Bauart zu einer Montageeinheit vorzugsweise lösbar derart verbindbar zu sein, dass ein Bereich der Montageeinheit, welcher dazu ausgelegt ist, mit einer Stalleinrichtungskomponente in Anlage zu treten, teilweise oder vollständig durch elektrisch nichtleitendes und / oder isolierendes Material gebildet wird.

7. System aus mindestens einer Stalleinrichtungskomponente, welche vorzugsweise mindestens ein verzinktes Stahlteil aufweist oder aus diesem besteht, und mindestens einem Montagebauteil gemäß einem der Ansprüche 1 bis 6.

8. System gemäß Anspruch 7, **dadurch gekennzeichnet, dass** es sich bei der Stalleinrichtungskomponente um eine Abtrennung, ein Panel, ein Gatter, eine Tür, einen Rahmen, einen Fressständer, einen Raumteiler oder eine sonstige Einrichtungskomponente aus der Nutztierhaltung handelt.

9. System gemäß Anspruch 7 oder 8, **dadurch gekennzeichnet, dass** mindestens zwei Stalleinrichtungskomponenten, welche vorzugsweise mindestens ein verzinktes Stahlteil aufweisen, mittels mindestens eines Montagebauteils gemäß einem der Ansprüche 1 bis 6 miteinander lösbar und / oder elektrisch isolierend verbunden sind.

10. Verwendung mindestens eines Montagebauteils gemäß einem der Ansprüche 1 bis 6 zur Verhinderung von Korrosion mindestens einer Stalleinrichtungskomponente, welche vorzugsweise mindestens ein verzinktes Stahlteil aufweist oder aus diesem besteht.

11. Verwendung mindestens eines Montagebauteils gemäß einem der Ansprüche 1 bis 6 zur Unterbrechung und / oder Verhinderung eines Stromflusses durch mindestens eine Stalleinrichtungskomponente, welche vorzugsweise mindestens ein verzinktes Stahlteil aufweist oder aus diesem besteht.
